# EUROPEAN PATENT APPLICATION

(11) **EP 3 995 124 A1**
(43) Date of publication of application: **11.05.2022**
(21) Application number: 20836832.4
(22) Date of filing: 25.06.2020
(51) Int. Cl.: A61J 1/05

(54) **MEDICINE CONTAINER FOR STORING PROTEIN PREPARATION**

(30) Priority: 05.07.2019 JP 2019126249
(71) Applicant: TERUMO Kabushiki Kaisha, Tokyo 151-0072 (JP)
(72) Inventor: KIMINAMI, Hideaki, Ashigarakami-gun, Kanagawa 259-0151 (JP); ABE, Yoshihiko, Ashigarakami-gun, Kanagawa 259-0151 (JP)
(74) Representative: Haseltine Lake Kempner LLP
(86) International application number: PCT/JP2020/025041
(87) International publication number: WO 2021/006057

(57) **Abstract**

[Problem] Provided is medical container which contributes to improvement in the stabilization of a protein drug to be filled.

[Solution] The medical container for filling a protein drug, containing a hydrogenated block copolymer.

## Description

### TECHNICAL FIELD

The present invention relates to a medical container for filling with the protein drugs.

### BACKGROUND ART

Protein drugs are expected to have a high therapeutic effect on not only many chronic diseases such as cancer, diabetes, hepatitis C, and chronic renal failure, but also rare diseases such as hemophilia, Fabry's disease, aplasia, multiple sclerosis, and Crohn's disease. However, the active ingredients of protein drugs, which derive from proteins and the like, are sensitive to physical and chemical stimuli and unstable.

As containers which filled with protein drugs, plastic containers, which are light in weight, unbreakable and excellent in handleability, have been widely used instead of glass containers, which are heavy and breakable.

Examples of plastic materials for manufacturing medical containers include polypropylene, polyethylene, cyclic olefin-based polymers, polyvinyl chloride, polyesters, polyamides, polycarbonates, and polymethacrylate. Among these plastics, cyclic olefin-based polymers have attracted attention as materials for medical containers, and the use thereof has been attempted variously.

Japanese Patent Laid-Open No. 2014-51502 (U.S. Patent No. 7253142) discloses the medical container using the cycloolefin copolymer which is the copolymer of a cyclic olefin and an olefin, a cycloolefin ring-opening polymer, or a hydrogenated cycloolefin ring-opening polymer.

### SUMMARY OF INVENTION

However, the medical container using the cyclic olefin-based polymer described in Japanese Patent Laid-Open No. 2014-51502 (U.S. Patent No. 7253142) has comparatively high gas permeability of oxygen or water vapor. When the filled protein drug is a liquid, even the absorption of oxygen with a deoxidizer or the like from the outside of the container does not enable fully absorbing oxygen. When the filled protein drug is a solid such as a freeze-dried agent, even the absorption of moisture with a water absorbent or the like from the outside of the container does not enable fully absorbing moisture. Therefore, the drugs in the container may be destabilized with dissolved oxygen or residual moisture.

Therefore, the present invention has been made in view of the above-mentioned situation, and an object of the present invention is to provide a medical container which contributes to improvement in the stabilization of a protein drugs to be filled.

The present inventors have repeated investigation earnestly to solve the above-mentioned problem. The present inventors have consequently found that the above-mentioned problem can be solved with the medical container for filling a protein drug containing a hydrogenated block copolymer and completed the present invention.

### BRIEF DESCRIPTION OF DRAWINGS

Fig. 1 shows the measurement results of the amount of moisture absorbed and the amount of moisture evaporated in syringes manufactured in Example and Comparative Example.
Fig. 2 shows the measurement results of the dissolved oxygen concentrations of a liquid drug filled in the syringes manufactured in Example and Comparative Example.
Fig. 3 shows the measurement results of the residual moisture concentrations of a powder drug filled in the syringes manufactured in Example and Comparative Example.

### DESCRIPTION OF EMBODIMENTS

Hereinafter, embodiments according to one aspect of the present invention will be described. The present invention is not limited to only the following embodiments.

"X to Y" indicating a range herein means "X or more and Y or less". Unless otherwise specified, drugs and the measurement of physical properties and the like are performed under the conditions of room temperature (20 to 25°C) and a relative humidity of 40 to 50% RH.

### <Medical container>

One aspect of the present invention is a medical container for filling a protein drug containing a hydrogenated block copolymer. A medical container which contributes to improvement in the stabilization of a protein drug to be filled by such a configuration can be provided. The "medical container for filling a protein drug" is also called merely a "medical container" herein. Since the medical container of the present aspect has high gas permeability of oxygen or water vapor as compared with containers made of cyclic olefin-based polymers, dissolved oxygen or residual moisture in a protein drug filled in the medical container can be greatly removed using the medical container in combination with a deoxidizer, a dehydrator, or a packaging material having a deoxidization function or a dehydration function. Therefore, the protein drugs can be stored more stably.

### [Hydrogenated block copolymer]

A hydrogenated block copolymer has at least two polymer blocks. The polymer blocks are not particularly limited as long as they are derived from polymers used for medical containers.

The density of the hydrogenated block copolymer is preferably 0.91 to 0.97 g/cm³ from the viewpoint of further producing the effect of the present invention. The density of the hydrogenated block copolymer is preferably 0.97 g/cm³ or less in that the gas permeability is high, and the stability of the protein drugs to be filled can be improved in combination with a packaging material having a deoxidization function or a dehydration function. The density of the hydrogenated block copolymer is preferably 0.91 g/cm³ or more with respect to the dimensional stability at the time of molding. The density can be measured according to ASTM D792.

The number average molecular weight of the hydrogenated block copolymer is preferably 20,000 to 300,000 from the viewpoint of further producing the effect of the present invention. The number average molecular weight can be measured by gel permeation chromatography (GPC).

The melt mass flow rate (MFR) of the hydrogenated block copolymer is preferably 0.5 to 300 g/10 min from the viewpoint of producing the effect of the present invention. The MFR can be measured according to JIS K 7210-1:2014, ASTM D1238, or ISO 1133-1:2011.

Especially when the hydrogenated block copolymer has a number average molecular weight of 20,000 or more and/or an MFR of 300 g/10 min, the proportion of constituent units derived from a conjugated diene having no side chain increases, the hydrogenated block copolymer has less steric hindrance as compared with polymers containing many constituent units derived from a side-chained conjugated diene, and the molecular mobility of polymer main chains increases in the case where the hydrogenated block copolymer has hydrogenated conjugated diene polymer blocks (mentioned below). Therefore, the gas permeability of the medical container can be increased. Since no side chain is contained, the weatherability increases without side chain cleavage caused by light or the like. Therefore, the transparency of the medical container can also be highly maintained.

In the hydrogenated block copolymer, it is preferable with respect to the moldability of a medical container for which injection molding or the like is used that the number average molecular weight be 300,000 or less, or the MFR be 0.5 g/10 min.

For example, the polymer blocks constituting the hydrogenated block copolymer are not particularly limited as long as they satisfy the above-mentioned density and number average molecular weight. However, the polymer blocks preferably have a hydrogenated vinyl aromatic polymer block and a hydrogenated conjugated diene polymer block from the viewpoint of further producing the effect of the present invention. When the hydrogenated block copolymer has a hydrogenated vinyl aromatic polymer block (hard segment) and a hydrogenated conjugated diene polymer block (soft segment), a reduction in density can be achieved, and a medical container with a higher gas permeability of oxygen or water vapor can be obtained as compared with a medical container using a cyclic olefin-based polymer described in Japanese Patent Laid-Open No. 2014-51502 (U.S. Patent No. 7253142). Therefore, dissolved oxygen or residual moisture in the protein drugs filled in the medical container can be more greatly removed using such a medical container in combination with a deoxidizer, a dehydrator, or a packaging material having a deoxidization function or a dehydration function. Therefore, the protein drugs can be stored more stably.

When the medical container contains the hydrogenated block copolymer, excellent weatherability and sterilization resistance can be exhibited.

When the polymer includes an unsaturated hydrocarbon (hydrocarbon compound containing double bonds or triple bonds), discoloration occurs due to the cleavage of double bonds or triple bonds by light, and the molecular mobility of polymer main chains decreases due to double bonds or triple bonds, and the gas permeability decreases. Therefore, in the medical container of the present aspect, the transparency and the gas permeability of the medical container can be improved using the hydrogenated block copolymer obtained by hydrogenating the block copolymer including a soft segment and a hard segment (excellent in shock resistance).

Hereinafter, the hydrogenated block copolymer which has the hydrogenated vinyl aromatic polymer block and the hydrogenated conjugated diene polymer block and which is a preferable embodiment will be described.

### (Hydrogenated vinyl aromatic polymer block)

The hydrogenated vinyl aromatic polymer block contains a constituent unit derived from a vinyl aromatic compound. The hydrogenated vinyl aromatic polymer block contains 50% by mass or more, preferably 80% by mass or more, more preferably 90% by mass or more, particularly preferably 100% by mass of constituent units derived from a vinyl aromatic compound.

Examples of the vinyl aromatic compound include styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, vinyltoluene, 1-vinylnaphthalene, and 2-vinylnaphthalene. The vinyl aromatic compound is preferably selected from styrene and α-methylstyrene, and is more preferably styrene.

The hydrogenated vinyl aromatic polymer block may contain only one type of the above-mentioned vinyl aromatic compound, or may contain two or more types.

The hydrogenated vinyl aromatic polymer block can contain other constituent units than the constituent unit derived from the vinyl aromatic compound. Examples of the other constituent units include constituent units derived from isoprene, butadiene, 2,3-dimethylbutadiene, 1,3-pentadiene, 1,3-hexadiene, and the like.

### (Hydrogenated conjugated diene polymer block)

The hydrogenated conjugated diene polymer block contains a constituent unit derived from a conjugated diene. The hydrogenated conjugated diene polymer block contains 50% by mass or more, preferably 80% by mass or more, more preferably 90% by mass or more, particularly preferably 100% by mass of constituent units derived from a conjugated diene.

Examples of the conjugated diene include butadiene, 2-methyl-1,3-butadiene (isoprene), 2,3-dimethyl-butadiene, 1,3-pentadiene, and 1,3-hexadiene. The conjugated diene is preferably selected from butadiene and isoprene, and is more preferably butadiene.

In one embodiment, the hydrogenated conjugated diene polymer block preferably contains constituent units derived from a conjugated diene having no side chain, and more preferably consists of constituent units derived from the conjugated diene having no side chain. In the molecular design for polymers, the molecular mobility of polymer main chains needs to be increased to impart gas permeability. When a side-chained conjugated diene is used, the hydrogenated block copolymer has less steric hindrance as compared with a conjugated diene having no side chain, and the molecular mobility of polymer main chains increases. Therefore, the gas permeability of the medical container can be increased. Since no side chain is contained, the weatherability increases without side chain cleavage caused by light or the like. Therefore, the transparency of the medical container can also be highly maintained. Examples of the conjugated diene having no side chain, butadiene, 1,3-pentadiene, and 1,3-hexadiene. As the conjugated diene having no side chain, butadiene is preferable.

In the hydrogenated conjugated diene polymer block, the bond form, namely microstructure, of the conjugated diene is not particularly limited. For example, in the case of butadiene, butadiene can be in bond forms which are 1, 2-bonds and 1,4-bonds. In the case of isoprene, isoprene can be in bond forms which are 1,2-bonds, 3,4-bonds, and 1,4-bonds. Only one type of such bond forms may exist, and two or more types thereof may exist. When two or more types of bond forms exist, the existence ratio between the bond forms is not particularly limited.

The hydrogenated conjugated diene polymer block can contain other constituent units than the constituent unit derived from the conjugated diene. Examples of the other constituent units include constituent units derived from styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, vinyltoluene, 1-vinylnaphthalene, 2-vinylnaphthalene, and the like.

The content of the hydrogenated conjugated diene polymer block is preferably 10 to 90% by mass based on 100% by mass in total of the hydrogenated vinyl aromatic polymer block and the hydrogenated conjugated diene polymer block. When the hydrogenated block copolymer contains the hydrogenated conjugated diene polymer block in the above-mentioned range, the gas permeability of oxygen or water vapor can be increased.

### (Hydrogenation rate)

In the hydrogenated vinyl aromatic polymer block according to the present embodiment, the hydrogenation rate of the aromatic rings of the hydrogenated vinyl aromatic polymer block is preferably 50% by mol or more, more preferably more than 80% by mol, and further preferably 90% by mol or more. The hydrogenation rate of the carbon-carbon double bonds derived from the conjugated diene of the hydrogenated conjugated diene polymer block is preferably 95% by mol or more, and more preferably 100% by mol.

The hydrogenation rate of the aromatic rings can be calculated, for example, by ¹H-NMR from the integral values of a peak near 0.5 to 2.5 ppm derived from the aliphatic series and a peak near 6.0 to 8.0 ppm derived from aromatic rings. The contents of carbon-carbon double bonds derived from the conjugated diene in the hydrogenated conjugated diene polymer block are measured with ¹H-NMR spectra before and after hydrogenation. The hydrogenation rate of the carbon-carbon double bonds can be found from the measured values.

### (Bond style of hydrogenated block copolymer)

The bond style of the polymer blocks in the hydrogenated block copolymer may be any of a linear shape, a branched shape, and a radiate shape, or may be a combination thereof.

For example, when the hydrogenated vinyl aromatic polymer block is represented by "X", and hydrogenated conjugated diene polymer block is represented by "Y", examples of the bond style include a diblock polymer (X-Y), a triblock copolymer (X-Y-X), a tetrablock copolymer (X-Y-X-Y), a pentablock copolymer (X-Y-X-Y-X or Y-X-Y-X-Y), and (X-Y)nZ type copolymer (Z is a coupling agent residue, and n is an integer of 2 or more). The bond style is preferably a triblock copolymer or a tetrablock copolymer, and is more preferably triblock copolymer from the viewpoint of the ease of production.

### (Method for producing hydrogenated block copolymer)

Although the method for producing a hydrogenated block copolymer is not particularly limited, well-known methods such as an anionic polymerization method can be used.

Specifically, the hydrogenated block copolymer according to the present invention can be produced by performing hydrogenation reaction after polymerization reaction is performed by a method for subjecting a vinyl aromatic compound and a conjugated diene to step polymerization using an alkyllithium compound as an initiator; a method for subjecting a vinyl aromatic compound and a conjugated diene to step polymerization using an alkyllithium compound as an initiator and subsequently adding a coupling agent for coupling; a method for subjecting a conjugated diene to step polymerization and subsequently subjecting a vinyl aromatic compound to step polymerization using a dilithium compound an initiator; or the like.

Examples of the alkyllithium compound include methyllithium, ethyllithium, n-butyllithium, sec-butyllithium, tert-butyllithium, and pentyllithium.

Examples of the coupling agent include divinylbenzene; polyvalent epoxy compounds such as epoxidized 1,2-polybutadiene, epoxidized soybean oil, 1,3-bis(N,N-glycidylaminomethyl)cyclohexane; halogenated compounds such as dimethyldichlorosilane, dimethyldibromosilane, trichlorosilane, methyltrichlorosilane, tetrachlorosilane, and tetrachlorotin; ester compounds such as methyl benzoate, ethyl benzoate, phenyl benzoate, diethyl oxalate, diethyl malonate, diethyl adipate, dioctyl adipate, dimethyl phthalate, diethyl phthalate, dimethyl isophthalate, and dimethyl terephthalate; carbonic ester compounds such as dimethyl carbonate, diethyl carbonate, and diphenyl carbonate; and alkoxysilane compounds such as dimethyldimethoxysilane, methyltrimethoxysilane, methyltriethoxysilane, tetramethoxysilane, tetraethoxysilane, bis(trimethoxysilyl)hexane, and bis(triethoxysilyl)ethane.

Examples of the dilithium compound include naphthalene dilithium and dilithiohexylbenzene.

Polymerization reaction is preferably performed in the presence of a solvent. The solvent is not particularly limited as long as it is inert to an initiator and does not have an adverse influence on reaction. Examples include saturated aliphatic hydrocarbons such as hexane, cyclohexane, heptane, octane, and decane; and aromatic hydrocarbons such as toluene, benzene, and xylene. The temperature for polymerization reaction is usually preferably 0 to 100°C, more preferably 30 to 90°C, further preferably 40 to 80°C, and particularly preferably 50 to 80°C from the viewpoint of microstructure control. The time for polymerization reaction is preferably 0.5 to 50 hours from the viewpoint of microstructure control.

A Lewis base may be used as a cocatalyst at the time of polymerization reaction. Examples of the Lewis base include ethers such as dimethyl ether, diethyl ether, and tetrahydrofuran; glycol ethers such as ethylene glycol dimethyl ether and diethylene glycol dimethyl ether; and amines such as triethylamine, N,N,N',N'-tetramethylethylene diamine, and N-methylmorpholine. These Lewis bases may be used alone or in combination of two or more.

Hydrogenation reaction may be performed subsequently to the polymerization reaction, or may be performed after the block copolymer is temporarily isolated after the polymerization reaction.

When the block copolymer is temporarily isolated after the polymerization reaction, the block copolymer can be isolated by pouring the polymerization reaction liquid obtained after the polymerization reaction into a poor solvent for the block copolymer such as methanol to solidify the block copolymer; or pouring the polymerization reaction liquid with steam into hot water to remove the solvent by azeotropy (steam stripping) and then dry the mixture.

The hydrogenation reaction of the block copolymer can be performed, for example, by reaction in the presence of a hydrogenation catalyst under the conditions of a reaction temperature of 20 to 200°C and a hydrogen pressure of 0.1 to 20 MPa for 0.1 to 100 hours.

Examples of the hydrogenation catalyst include Raney nickel; heterogeneous catalysts in which metals such as platinum (Pt), palladium (Pd), ruthenium (Ru), rhodium (Rh), and nickel (Ni) are carried on carriers such as carbon, alumina and diatomite; Ziegler catalysts consisting of the combinations of transition metal compounds (nickel octylate, nickel naphthenate, nickel acetylacetonate, cobalt octylate, cobalt naphthenate, cobalt acetylacetonate, and the like) and organic aluminium compounds such as triethyl aluminum and triisobutyl aluminum or the like; and metallocene catalysts consisting of the combination of bis (cyclopentadienyl) compounds of transition metals such as titanium, zirconium, and hafnium and organometallic compounds consisting of lithium, sodium, potassium, aluminum, zinc, or magnesium, or the like.

When the hydrogenation reaction is performed subsequently to the polymerization reaction, the hydrogenated block copolymer can be isolated by pouring the hydrogenation reaction liquid into a poor solvent for the hydrogenated block copolymer such as methanol to solidify the hydrogenated block copolymer; or pouring the hydrogenation reaction liquid with steam into hot water to remove the solvent by azeotropy (steam stripping) and then dry the mixture.

The hydrogenated block copolymer according to the present aspect may be produced by the above-mentioned method, or a commercial item may be used. Examples of the commercial item include ViviOn(TM) (produced by USI Corporation).

### [Protein drugs]

According to one embodiment of the present invention, the above-mentioned medical container fills a protein drug.

The "protein drug" contains an active ingredient consisting of a protein or a peptide derived from organisms herein. Examples of the active ingredient include antibodies, blood coagulation fibrinolysis factors, hormones, enzymes, cytokines, interferons, serum proteins, vaccines, erythropoietins, and fused proteins. The protein drugs to be filled in the protein drugs container according to the present invention is not particularly limited, and a well-known protein drug can be used. The protein drugs may be liquid or solid.

Examples of the antibodies include adalimumab, muromonab-CD3, trastuzumab, rituximab, palivizumab, infliximab, basiliximab, tocilizumab, gemtuzumab ozogamicin, bevacizumab, ibritumomab tiuxetan, cetuximab, ranibizumab, omalizumab, eculizumab, panitumumab, ustekinumab, golimumab, canakinumab, and denosumab.

Examples of the blood coagulation fibrinolysis factor include octocog alfa, rurioctocog alfa, nonacog alfa, and thrombomodulin alfa.

Examples of the hormones include insulin glargine, insulin human, insulin lispro, insulin aspart, insulin detemir, insulin glulisine, somatropin, pegvisomant, follitropin alfa, follitropin beta, liraglutide, and teriparatide.

Examples of the enzymes include alteplase, imiglucerase, agalsidase alfa, laronidase, alglucosidase alfa, idursulfase, galsulfase, and rasburicase.

Examples of the cytokines include filgrastim, celmoleukin, and trafermin.

Examples of the interferons include interferon alfa and interferon beta.

Examples of the serum proteins include human serum albumin.

Examples of the vaccines include a recombinant sedimented hepatitis B vaccine (derived from yeast) and a dry cell culture inactivated hepatitis A vaccine.

Examples of the erythropoietins include epoetin alfa and epoetin beta.

Examples of the fused proteins include etanercept, abatacept, and romiplostim.

The blend contents and the physical properties such as the pH of the protein drugs are not particularly limited, and can be suitably adjusted depending on the type of the protein drugs to be used.

The protein drugs may contain additives such as a stabilizer, a buffer, a solubilizing agent, an isotonizing agent, a pH adjuster, a soothing agent, a reducing agent, and an antioxidant, if needed, in addition to the above-mentioned components.

Examples of the additives include surfactants such as nonionic surfactants such as sorbitan fatty acid esters, glycerin fatty acid esters, polyglyceryl fatty acid esters, polyoxyethylene sorbitan fatty acid esters, polyoxyethylene sorbitol fatty acid esters, polyoxyethylene glycerin fatty acid esters, polyethylene glycol fatty acid esters, polyoxyethylene alkyl ethers, polyoxyethylene polyoxypropylene alkyl ethers, polyoxyethylene alkyl phenyl ethers, polyoxyethylene hydrogenated castor oil, polyoxyethylene yellow beeswax derivatives, polyoxyethylene lanolin derivatives, polyoxyethylene fatty acid amides, lecithins, glycerophospholipid, sphingophospholipids, and sucrose fatty acid esters and anionic surfactants such as alkyl sulfates, polyoxyethylene alkyl ether sulfates, and alkyl sulfosuccinate ester salts; amino acids such as leucine, tryptophan, serine, glutamic acid, arginine, histidine, lysine, methionine, phenylalanine, and acetyltryptophan; phosphates such as disodium monohydrogen phosphate and sodium dihydrogen phosphate; citrates such as sodium citrate; polyoxyethylene sorbitan monooleate (polysorbate 80) and/or polyoxyethylene sorbitan monolaurate (polysorbate 20), cremophor, ethanol, and sodium dodecylbenzenesulfonate; polyethylene glycol; and sugars such as dextran, mannitol, sorbitol, inositol, glucose, fructose, lactose, xylose, mannose, maltose, sucrose, and raffinose.

The amount of the protein drugs filled in the medical container can be suitably adjusted depending on the type, the use application, the use form, and the like of the protein drugs.

The shape, size, and the like of the medical container are not particularly limited, and can be suitably selected depending on the type, the amount, the use application, the use form, and the like of the filled protein drugs.

Examples of the shape of the medical container include bags, vials, ampuls, syringes, cartridges, and bottles, and the syringes or the cartridges are preferable.

The medical container may have a structure formed of only the hydrogenated block copolymer according to the present aspect, or may have a lamination structure having a layer formed of the hydrogenated block copolymer according to the present aspect or a structure formed of a mixture of the hydrogenated block copolymer according to the present aspect and other polymers as long as the effect of the present invention is not deteriorated.

Portions such as plugs, the gaskets, and the plungers other than the body of the container may be formed of materials other than the hydrogenated block copolymer according to the present aspect depending on the shape of the medical container.

The medical container can be manufactured using a well-known method such as injection molding, extrusion, blowing, rotational molding, blow molding, transfer molding, press molding, and the solution casting method.

A method for sterilizing a medical container is not particularly limited, and a conventionally well-known method such as radiation sterilization, ethylene oxide sterilization, nitrogen dioxide sterilization, or autoclave sterilization can be used.

When the medical container fills the protein drugs, the protein drugs can be filled in the medical container in accordance with the usual method.

### <Packaged body>

One aspect of the present invention is a packaged body including the above-mentioned medical container packaged in a packaging material. In the packaged body of the present aspect, at least one of a deoxidizer and a dehydrator is packaged with the above-mentioned medical container in the packaging material; or the packaging material has a function of at least one of a deoxidization function and a dehydration function. Dissolved oxygen or residual moisture in the protein drugs filled in the medical container can be greatly removed by such a configuration. Therefore, the protein drugs can be stored more stably.

The packaging material according to the present aspect is a barrier packaging material from the viewpoint of further producing the effect of the present invention. The barrier packaging material has at least one of an oxygen barrier property and a moisture barrier property. The barrier packaging material may be formed of a monolayer, or may be formed in a laminated structure having two or more layers. When the barrier property packaging material is a laminated structure, at least one layer has at least one of an oxygen barrier property and a moisture barrier property.

In one embodiment, the packaged body of the present aspect includes at least one of a deoxidizer and a dehydrator in a packaging material or between barrier layers constituting the packaging material from the outer surface of the medical container. When the barrier packaging material includes a deoxidizer, the barrier property of the barrier packaging material has at least an oxygen barrier property. When the barrier packaging material includes a dehydrator, the barrier property of the barrier packaging material has at least a moisture barrier property.

According to one embodiment, the packaged body of the present aspect has at least one of a deoxidizer and a dehydrator in a portion thereof so that at least one function of a deoxidization function and a dehydration function may be exhibited in the packaging material.

The deoxidizer is not particularly limited, and conventionally well-known deoxidizers can be used. Examples of the deoxidizer include iron compounds such as iron hydroxide, iron oxide, and iron carbide, glucose and a deoxidizer using an enzyme action of glucose oxidase. Example of commercial items include AGELESS (registered trademark) (produced by MITSUBISHI GAS CHEMICAL COMPANY, INC.), MODULAN (produced by Nippon Kayaku Food Techno Co., Ltd.), and Sequl(registered trademark) (produced by NISSO FINE CO., LTD.).

The dehydrator is not particularly limited, and conventionally well-known dehydrators can be used. Examples of the dehydrator include calcium chloride, silica gel, potassium aluminum silicate, and calcium aluminum silicate.

The packaging material is not particularly limited, and a film, a sheet, and the like commonly used widely for many purposes as packaging materials for medical containers can be used. The material of the packaging material having a gas barrier property is preferable so that a medical unstable in the presence of oxygen or water vapor can be stably stored. Examples of the material having a gas barrier property include polyethylene, polypropylene, polyethylene terephthalate, polyvinyl alcohol, polyethylene naphthalate, an ethylene-vinyl alcohol copolymer, polyvinylidene chloride, a vinylidene chloride-vinyl chloride copolymer, a vinylidene chloride-acrylate ester copolymer, polyacrylonitrile, polyamide, and polyester.

The packaging material may be a laminated body having at least one of the above-mentioned materials as a layer component. The packaging material may contain a layer having shading ability such as an aluminum foil layer, an aluminum deposited layer, an aluminum oxide deposited layer, or a silicon oxide deposited layer.

The packaging material having at least one function of a deoxidization function and a dehydration function can be used for the packaged body of the present aspect. As such a packaging material, for example, a film in which at least one layer contains a deoxidizer or a dehydrator can be used.

Examples of commercial items which are packaging materials having a deoxidization function include OxyCatch(registered trademark) (produced by Kyodo Printing Co., Ltd.), High-Star O2 (produced by Starplastic Industry Inc.), AGELESS OMAC(registered trademark) (produced by MITSUBISHI GAS CHEMICAL COMPANY, INC.), and OXYDEC (produced by Toyo Seikan Co., Ltd.).

Examples of commercial items which are packaging materials having a dehydration function include silica gel (produced by TOYOTAKAKO Co., ltd.).

The structure, the shape, and the like of the packaged body of the present aspect are not particularly limited and are suitably selected depending on the medical container to be packaged. For example, when the medical container is packaged with a deoxidizer or a dehydrator by the blister method, A body part with a recess which fills a medical container and a covering part covering the recess can be formed of films or sheets selected depending on functions required for the parts, and a structure in which the body part and the covering parts are sealed in the periphery thereof and the like can be formed.

### EXAMPLES

The effect of the present invention will be described using the following the Example and the Comparative Example. However, the technical scope of the present invention is not limited to only the following Example. Unless otherwise specified, "%" and "part" mean "% by mass" and "part by mass", respectively.

### [Example]

### (Manufacturing of syringe)

A luer lock syringe main part for a prefilled syringe drug (syringe size: in accordance with 2.25 mL of the ISO standard 11040-6) was manufactured by insertion injection molding using a hydrogenated block copolymer ("ViviOn(TM)", produced by USI Corporation, density: 0.94 g/cm³, number average molecular weight: 82,000, MFR: 7 g/10min).

### [Comparative Example]

### (Manufacturing of syringe)

A luer lock syringe main part for a prefilled syringe drug (syringe size: in accordance with 2.25 mL of the ISO standard 11040-6) was manufactured by insertion injection molding using a cyclic polyolefin polymer ("ZEONEX(registered trademark)", produced by Zeon Corporation, density: 1.01 g/cm³, number average molecular weight: 45,000, MFR: 17 g/10min).

### [Measurement of amount of moisture absorbed and amount of moisture evaporated]

### (Measurement of amount of moisture absorbed)

To each syringe obtained above was added 0.9 g of calcium chloride, and the needle point was sealed with a rubber stopper. The weight of the syringe immediately after sealing (0 weeks) was measured, the syringe was then stored under the environment of 40°C and RH 75%. The weights of the syringe after storage for certain periods of time (1, 2, 4, 8, 12, 16, 20, and 24 weeks) were measured, and the amount of change in weight from zero week was considered as the amount of change in moisture. The weights of the syringe were measured with a precision balance.

### (Measurement of moisture evaporated)

To each syringe obtained above was added 1 g of water, the needle point was sealed with a rubber stopper. The weight of the syringe immediately after sealing (0 weeks) was measured, the syringe was then stored in the environment of 40°C and 20% RH. The weights of the syringe after storage for certain periods of time (1, 2, 4, 8, 12, 16, 20, and 24 weeks) was measured, and the amount of change in weight from 0 weeks was considered as the amount of moisture evaporated. The weights of the syringe were measured with the precision balance.

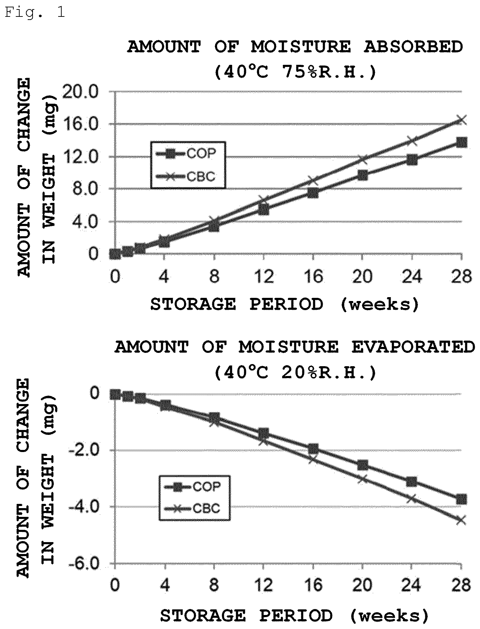

Fig. 1 shows the measurement results of the amount of water absorbed and the measurement results of the amount of moisture evaporated. In Fig. 1, "CBC" indicates the measurement results in the syringe of Example, and "COP" shows the measurement results in the syringe of Comparative Example.

As shown in Fig. 1, it is found that moisture easily permeate the syringe of Example as compared with the syringe of Comparative Example.

### [Measurement of dissolved oxygen concentration in liquid drugs]

An adalimumab placebo solution (produced by AbbVie GK) was prepared according to the attached document, and a model liquid drug which was a protein drug was prepared.

To each syringe obtained above was added 1 mL of the model liquid drug, the dissolved oxygen concentration (0 weeks) was measured, and the needle point was sealed with a rubber stopper.

A blister pack (a top film (two-layer film consisting of a polyethylene layer and a polyethylene terephthalate layer) and a bottom film (polyethylene film)) in which the sealed syringe and a deoxidizer ("AGELESS(registered trademark)", produced by MITSUBISHI GAS CHEMICAL COMPANY, INC.) were packaged was manufactured.

The dissolved oxygen concentrations of the model liquid drug in the syringe after storage for certain periods of time (0.5, 1, 2, 4, 8, and 12 weeks) were measured.

The dissolved oxygen concentrations were measured using an OXY-4 (manufactured by PreSens Precision Sensing GmbH).

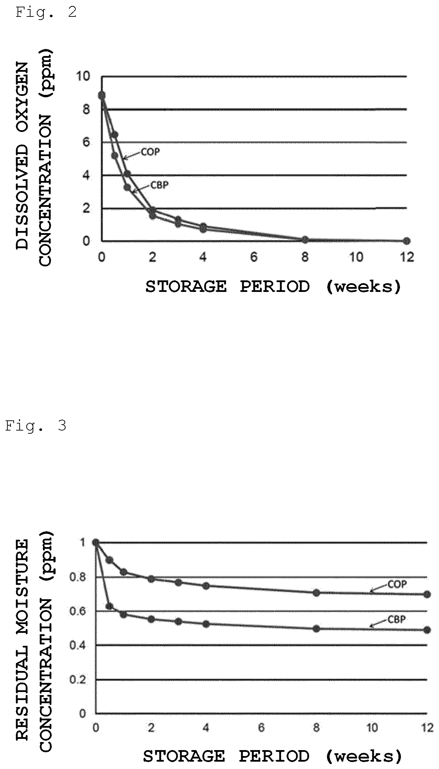

Fig. 2 shows the results. In Fig. 2, "CBC" indicates the measurement results in the syringe of Example, and "COP" indicates the measurement results in the syringe of Comparative Example.

As shown in Fig. 2, it is found out that the dissolved oxygen concentration in the liquid drug can be further reduced, namely residual oxygen in the liquid medicine can be further removed using the syringe of Example as compared with the syringe of Comparative Example.

### [Measurement of moisture concentration in powder drugs]

An octocog alfa placebo solution (produced by Bayer Holding Ltd.) was prepared according to the attached document, and the octocog alfa placebo liquid drug was prepared.

To each syringe obtained above was added 1 mL of the octocog alfa liquid drug, and the drug was freeze-dried to produce a syringe containing a model powder drug which is the protein drug containing the octocog alfa placebo. The residual moisture concentration of the model powder drug in the syringe (0 weeks) was measured, and the needle point was then sealed with a rubber stopper.

A blister pack (a top film (three-layer film consisting of a polyethylene layer, an ethylene-vinyl alcohol copolymer layer, and a polyethylene terephthalate layer) and a bottom film (two-layer film consisting of a polyethylene layer and an ethylene-vinyl alcohol copolymer layer)) in which the sealed syringe and a dehydrator (desiccant silica gel for packaging) were packaged was manufactured.

The residual moisture concentrations in the octocog alfa powder drug in the syringe after storage for certain periods of time (0.5, 1, 2, 4, 8, and 12 weeks) were measured.

The residual moisture concentrations were measured using a Karl-Fischer moisture meter.

Fig. 3 shows the results. In Fig. 3, "CBC" indicates the measurement results in the syringe of Example, and "COP" indicates the measurement results in the syringe of Comparative Example.

As shown in Fig. 3, it is found that the moisture concentration in the powder drug can be reduced, namely residual moisture in the liquid medicine can be further removed using the syringe of Example as compared with the syringe of Comparative Example.

The present application is based on Japanese Patent Application No. 2019-126249, which was filed on July 5, 2019. Its disclosure is cited as the entirety by reference.

## Claims

1. A medical container for filling a protein drug, comprising a hydrogenated block copolymer.

2. The medical container according to claim 1, wherein the hydrogenated block copolymer has a density of 0.91 to 0.97 g/cm³.

3. The medical container according to claim 1 or 2, wherein the hydrogenated block copolymer has a number average molecular weight of 20,000 to 300,000.

4. The medical container according to any one of claims 1 to 3, wherein the hydrogenated block copolymer has a hydrogenated vinyl aromatic polymer block and a hydrogenated conjugated diene polymer block.

5. The medical container according to claim 4, wherein the hydrogenation vinyl aromatic polymer block has a hydrogenation rate of 50% by mol or more, and the hydrogenated conjugated diene polymer block has a hydrogenation rate of 95% by mol or more.

6. The medical container according to claim 4 or 5, wherein a content of the hydrogenated conjugated diene polymer block is 10 to 90% by mass based on 100% by mass in total of the hydrogenated vinyl aromatic polymer block and the hydrogenated conjugated diene polymer block.

7. The medical container according to any one of claims 1 to 6, wherein the medical container fills a protein drug.

8. A packaged body comprising the medical container according to any one of claims 1 to 7 packaged in a packaging material,
wherein at least one of a deoxidizer and a dehydrator is packaged with the medical container in the packaging material; or
the packaging material has at least one function of a deoxidization function and a dehydration function.
